(19) Europäisches Patentamt
European Patent Office
Office européen des brevets

(11) EP 0 932 652 B2

(12) NEUE EUROPÄISCHE PATENTSCHRIFT

(45) Veröffentlichungstag und Bekanntmachung des Hinweises auf die Entscheidung über den Einspruch:
**23.04.2008 Patentblatt 2008/17**

(45) Hinweis auf die Patenterteilung:
**18.12.2002 Patentblatt 2002/51**

(21) Anmeldenummer: **97913141.4**

(22) Anmeldetag: **15.10.1997**

(51) Int Cl.:
***C09D 5/34*** *(2006.01)* ***C09D 133/06*** *(2006.01)*
***C09K 3/10*** *(2006.01)*

(86) Internationale Anmeldenummer:
**PCT/EP1997/005663**

(87) Internationale Veröffentlichungsnummer:
**WO 1998/016589 (23.04.1998 Gazette 1998/16)**

(54) **VERWENDUNG VON POLYMERISATDISPERSIONEN ALS BINDEMITTEL FÜR DICHTUNGS- ODER BESCHICHTUNGSMASSEN**

USE OF POLYMER DISPERSIONS AS BINDING AGENTS FOR SEALING COMPOUNDS AND COATING COMPOUNDS

UTILISATION DE DISPERSIONS DE POLYMERE COMME LIANTS POUR PRODUITS D'ETANCHEITE OU DE REVETEMENT

(84) Benannte Vertragsstaaten:
**DE ES FI FR GB IT SE**

(30) Priorität: **16.10.1996 US 720977**

(43) Veröffentlichungstag der Anmeldung:
**04.08.1999 Patentblatt 1999/31**

(73) Patentinhaber: **BASF SE**
**67056 Ludwigshafen (DE)**

(72) Erfinder:
- **ZHAO, Cheng-Le**
  **D-68723 Schwetzingen (DE)**
- **WISTUBA, Eckehardt**
  **D-67098 Bad Dürkheim (DE)**
- **ROSER, Joachim**
  **D-68165 Mannheim (DE)**
- **FITZGERALD, Paul**
  **Charlotte, NC 28270 (US)**
- **SPITZER, Jan**
  **Charlotte, NC 28277 (US)**

(74) Vertreter: **Kinzebach, Werner et al**
**Patent Attorneys**
**Reitstötter, Kinzebach & Partner**
**Sternwartstrasse 4**
**81679 München (DE)**

(56) Entgegenhaltungen:

| | |
|---|---|
| **EP-A- 0 258 988** | **EP-A- 0 557 332** |
| **US-A- 4 210 565** | **US-A- 4 267 091** |
| **US-A- 4 855 349** | **US-A- 4 894 261** |
| **US-A- 4 952 623** | **US-A- 5 070 136** |
| **US-A- 5 208 282** | **US-A- 5 432 229** |
| **US-A- 5 498 659** | **US-A- 5 623 014** |

- **Chemical Abstracts, Band 127, Nr. 20, 17 November 1997, (Columbus, Ohio, US), Seite 1, Zusammenfassung 279644; & JP,A2,9235507, (Takahashi, Kazuhiko et al) 9 September 1997**

EP 0 932 652 B2

## Beschreibung

Die vorliegende Erfindung betrifft die Verwendung von Zubereitungen, die wenigstens eine wäßrige Polymerisatdispersion, deren Polymerisat funktionelle Gruppen aufweist, und wenigstens eine Verbindung mit zwei oder mehr $NH_2$-Gruppen pro Molekül enthalten, als Bindemittel in Dichtungs- oder Beschichtungsmassen für hydrophobe Substrate. Die vorliegende Erfindung betrifft auch Dichtungs- oder Beschichtungsmassen, die eine derartige Zubereitung enthalten und die sich für die Beschichtung von hydrophoben Substraten, wie Polyurethanschäumen oder Bauteile aus EPDM-Kunststoffen, eignen.

Baumaterialien werden zum Schutz vor Umwelteinflüssen und damit vor Verwitterungsprozessen häufig mit Beschichtungsmassen versiegelt. Als Umwelteinflüsse, insbesondere im Außenbereich, sind beispielsweise Sonnenlicht, Temperaturschwankungen, Feuchtigkeit, chemische Einflüsse als Folge der zunehmenden Umweltverschmutzung, aber auch mechanische Einflüsse zu nennen. Geeignete Beschichtungsmassen müssen gegenüber den genannten Umweitbedingungen stabil sein, d.h., sie sollten neben einer geringen Neigung zur Wasseraufnahme eine hohe Photostabilität und eine hohe Widerstandsfähigkeit gegenüber oxidierenden Bedingungen, wie sie insbesondere beim Zusammenwirken intensiver Sonneneinstrahlung und verschmutzter Luft auftreten können, aufweisen. Weiterhin müssen die Massen eine hohe mechanische Stabilität, insbesondere hohe Zugfestigkeit aufweisen, damit sich bei den durch Temperaturschwankungen hervorgerufenen Dimensionsänderungen der Bauteile keine Risse bilden. Diese Eigenschaft dürfen sie auch bei tiefen Temperaturen nicht verlieren. Umgekehrt dürfen sie bei hohen Temperaturen nicht klebrig werden, was unerwünschte Anschmutzeffekte zur Folge hätte. Weiterhin ist erwünscht, daß die Beschichtungsmassen Licht und Wärme reflektieren, um so extreme Temperaturschwankungen der Baumaterialien zu vermeiden. Von besonderer Bedeutung ist die gute Haftung der Beschichtungsmassen auf dem zu versiegelnden Untergrund. Dies ist besonders wichtig bei hydrophoben Baumaterialien wie Polyurethanschäumen oder Bauteilen aus EPDM-Kunststoffen, auf denen übliche Beschichtungsmassen nur schlecht haften.

Ein Großteil der für die Beschichtungsmassen geforderten Eigenschaften hängt vom jeweils verwendeten Bindemittel ab. So konnte von W.A. Zissmann (Advances in Chemistry, Series 43, Gould edition, ACS Washington 1964) gezeigt werden, daß eine gute Haftung auf Substraten mit niedriger Oberflächenspannung und geringer Polarität (hydrophobe Substrate) dann gegeben ist, wenn die Bindemittelpolymerisate ihrerseits eine geringe Oberflächenspannung und eine niedrige Polarität aufweisen. In der Regel ist die Oberfläche von Polymerteilchen in Polymerisatdispersionen mit polaren Gruppen belegt, beispielsweise durch Adsorption von ionischen oberflächenaktiven Substanzen. Dies schränkt die Wahl möglicher Polymerisate sowie der oberflächenaktiven Substanzen ein. Weiterhin sollten die als Bindemittel verwendeten Polymerisate in verfilmtem Zustand eine hohe Reißfestigkeit und eine gute Dehnbarkeit aufweisen. Darüber hinaus müssen die Bindemittelpolymerisate ein hohes Pigmentbindevermögen besitzen, um die Stabilität der Beschichtungsmassen zu gewährleisten.

Verschiedentlich wurde über Bindemittelpolymerisate berichtet, die teilweise dem gewünschten Eigenschaftsprofil entsprechen. So beschreibt die EP-A 187 505 ein Bindemittelpolymerisat, das sich durch erhöhte Reißfestigkeit bei vergleichsweise hoher Flexibilität auszeichnet. Das beschriebene Bindemittelpolymerisat wird durch Umsetzung eines Primärlatex in gequollenem Zustand mit einem Monomer, das wenigstens zwei ethylenisch ungesättigte Bindungen aufweist, erhalten. Dieser zweistufige Prozeß ist jedoch sehr aufwendig und erhöht die Herstellungskosten derartiger Bindemittelpolymerisate.

Die US-A 3,345,336 beschreibt Polymerisate, die Carbonylgruppen aufweisen, welche mit Hydraziden polybasischer Carbonsäuren vernetzt werden können. In vernetztem Zustand weisen die Polymerisate hohe Lösungsmittelfestigkeit auf. Sie werden zur Behandlung von Leder, Textilmaterialien und Papier verwendet.

Die EP-B 258 988 beschreibt eine Beschichtungsmasse für Polyurethanschäume, die ein Bindemittelpolymerisat enthält, das Acetoacetyl- oder Cyanoacetyl-Gruppen aufweist. Die Beschichtungsmasse zeichnet sich durch hohe Adhäsion auf dem Polyurethanschaum aus. Während die Reißfestigkeit derartiger Bindemittelpolymerisate durch Einbau der funktionellen Gruppen erhöht wird, ist jedoch gleichzeitig eine merkliche Verringerung der Dehnbarkeit dieser Beschichtungen zu verzeichnen. Dieser Verlust an Dehnbarkeit ist vermutlich eine Folge von Vernetzungsreaktionen der reaktiven Methylen- und Carbonylgruppen der obengenannten, im Polymerisat enthaltenen funktionellen Einheiten.

Der vorliegenden Erfindung liegt die Aufgabe zugrunde, ein Bindemittel auf Polymerisatbasis bereitzustellen, das dem gewünschten Eigenschaftsprofil in hohem Maße entspricht.

Überraschenderweise wurde nun gefunden, daß Zubereitungen aus wäßrigen Polymerisatdispersionen a), deren Polymere funktionelle Gruppen enthalten, die mit $NH_2$-Gruppen unter Ausbildung stabiler Bindungen reagieren können und die unter Ketogruppen und Oxiranringen ausgewählt sind, und Verbindungen b), die zwei oder mehr $NH_2$-Gruppen aufweisen, diese Aufgabe lösen und als Bindemittel für Beschichtungsmassen mit dem gewünschten Eigenschaftsprofil brauchbar sind.

Die vorliegende Erfindung betrifft somit die Verwendung von Zubereitungen, bestehend aus wenigstens einer wässrigen Polymerisatdispersion als Komponente a) deren Polymerisat eine Glasübergangstemperatur unterhalb 10 und oberhalb -60°C aufweist und funktionelle Gruppen $-X-Y-R^1$ aufweist, worin

$R^1$ für Alkyl, Aryl oder Aralkyl steht,
Y für C=O steht,
-X- ausgewählt ist unter einer Einfachbindung, Alkylen, Arylen, $-R^2-O-R^3-$, $-R^2-Z-O-R^3-$, $-R^2-Z-CH_2-R^3-$, $-R^2-Z-N(R^4)-R^3-$, $-R^2-O-Z-O-R^3-$, $-R^2-O-Z-CH_2-R^3-$, $-R^2-O-Z-N(R^4)-R^3-$, $-R^2-N(R^5)-Z-O-R^3-$, $-R^2-N(R^5)-Z-CH_2-R^3-$, $-R^2-N(R^5)-Z-N(R^4)-R^3-$, worin
$-R^2-$ für eine Einfachbindung, Alkylen, Oxyalkylen, Polyoxyalkylen, Arylen steht und an das Polymer gebunden ist,
$-R^3-$ für Alkylen oder Arylen steht und an Y gebunden ist,
Z für $SO_2$ oder C=O steht,
$R^4$ und $R^5$ unabhängig voneinander für Wasserstoff, Alkyl, Aryl, Aralkyl oder eine Gruppe $-R^3-Y-R^1$ stehen, worin Y, $R^1$ und $R^3$ die zuvor genannten Bedeutungen besitzen,

und wenigstens einer Verbindung mit mindestens zwei $NH_2$-Gruppen pro Molekül als Komponente b), als Bindemittel in Dichtungs- oder Beschichtungsmassen für Polymethanschäume.

Die erfindungsgemäßen Zubereitungen werden als Bindemittel in Dichtungs- oder Beschichtungsmassen für Oberflächen von Polyurethanschäumen oder -massen verwendet.

Im folgenden steht Alkyl vorzugsweise für lineare oder verzweigte $C_1$-$C_{12}$-Alkylgruppen, insbesondere $C_1$-$C_8$-Alkylgruppen, z.B. Methyl, Ethyl, n-Propyl, i-Propyl, 1-Butyl, 2-Butyl, i-Butyl, t-Butyl, 1-Pentyl, 2-Pentyl, 3-Pentyl, 1-Hexyl oder 2-Ethylhexyl. Aryl steht vorzugsweise für Phenyl oder Naphthyl, die gegebenenfalls auch 1 bis 4 Substituenten tragen können, die unabhängig voneinander ausgewählt sind unter $C_1$-$C_4$-Alkyl, insbesondere Methyl oder Ethyl, $C_1$-$C_4$-Alkoxy, z.B. Methoxy oder Ethoxy, Hydroxy, das gegebenenfalls auch ethoxyliert sein kann, oder Halogen. Alkylen steht für einen zweiwertigen Alkylrest, vorzugsweise einen $C_1$-$C_{12}$-Alkylrest, z.B. Methylen, 1,1- oder 1,2-Ethylen, 1,1-, 1,2-, 1,3-, 2,2-Propylen. Arylen steht für einen zweiwertigen Arylrest, vorzugsweise für 1,2- oder 1,4-Phenylen. Aralkyl steht für einen Arylrest, der an das jeweilige Zentrum über eine Alkylengruppe gebunden ist. Oxyalkylen steht für eine Alkyleneinheit, die über ein Sauerstoffatom an das Polymer gebunden ist, entsprechend steht Polyoxyalkylen für Alkyleneinheiten, die jeweils durch Sauerstoffatome miteinander verbunden sind.

Die in den erfindungsgemäßen Bindemittelzubereitungen enthaltenen Polymerisate sind dadurch gekennzeichnet, daß sie reaktive Zentren Y aufweisen, die mit $NH_2$-Gruppen eine Reaktion unter Ausbildung einer Bindung eingehen können ohne jedoch selber untereinander zu reagieren. Die reaktiven Zentren sind Carbonylgruppen (CO). Das reaktive Zentrum Y ist entweder direkt oder über ein Brückenglied X an das Polymer gebunden. Die reaktiven Zentren können die für sie üblichen Substituenten tragen. Somit lassen sich die in den Polymerisaten enthaltenen funktionellen Gruppen durch die Formel $-X-Y-R^1$ beschreiben.

Erfindungsgemäß handelt es sich bei dem reaktiven Zentrum Y um eine Carbonylgruppe. $R^1$ ist vorzugsweise Alkyl, insbesondere Methyl. In den bevorzugten Ausführungsformen kann das Brückenglied X für eine Einfachbindung, für eine $C_1$-$C_6$-Alkyleneinheit oder insbesondere für eine Gruppe $-R^2-Z-O-R^3$oder $-R^2-Z-N(R^4)-R^3-$ stehen. Hierin besitzen $R^2$, $R^3$ und Z die zuvor genannten Bedeutungen, vorzugsweise steht Z für CO, $R^2$ für eine Einfachbindung oder für $C_1$-$C_4$-Alkylen und $R^3$ für $C_1$-$C_4$-Alkylen, insbesondere für Methylen oder für p-Phenylen. $R^4$ steht vorzugsweise für Wasserstoff, $C_1$-$C_4$-Alkyl oder eine Gruppe $-R^3-Y-R^1$, worin $R^1$, $R^3$ und Y die obengenannten Bedeutungen besitzen, vorzugsweise jene Bedeutungen, die bereits oben für sie als bevorzugt angegeben wurden. Besonders bevorzugt weisen X, Y, Z, $R^1$, $R^2$, $R^3$, $R^4$ und $R^5$ gemeinsam die als bevorzugt angegebenen Bedeutungen auf.

Polymerisate, die funktionelle Gruppen $-X-Y-R^1$ enthalten, sind auf unterschiedlichen Wegen zugänglich. So können die reaktiven Zentren Y im Polymer durch Umwandlung bestehender Funktionalitäten im Sinne einer polymeranalogen Reaktion erzeugt werden. Beispiele hierfür sind die Umsetzung von gegebenenfalls im Polymer enthaltenen Doppelbindungen mit Carbonylierungsreagenzien oder die Oxidation von aliphatischen OH-Gruppen in Carbonylgruppen. Auch können die reaktiven Zentren Y mittels niedermolekularer Verbindungen, die sowohl ein oder mehrere reaktive Zentren Y als auch wenigstens eine davon verschiedene funktionelle Gruppe enthalten, welche mit den im Polymer enthaltenen funktionellen Gruppen unter Bindungsbildung reagieren kann, in das Polymer im Sinne einer polymeranalogen Reaktion eingeführt werden. Der zweite Reaktionstyp kann beispielsweise durch Umsetzung der im Polymer gegebenenfalls vorliegenden OH- bzw. $NH_2$-Gruppen mit Verbindungen, die nukleophilen Substitutionsreaktionen zugänglich sind, beispielsweise Epihalogenhydrinen oder $\alpha$-Halogencarbonylverbindungen, realisiert werden.

Vorzugsweise werden jedoch die Polymerisate der Komponente a) durch radikalische Copolymerisation wenigstens eines ethylenisch ungesättigten Monomer A mit wenigstens einem ethylenisch ungesättigten Monomeren B der allgemeinen Formel I

$$R^7-CH=C(R^6)-X-Y-R^1 \qquad (I)$$

worin $R^6$ für Wasserstoff oder Methyl, $R^7$ für Wasserstoff, Alkyl, Aryl, Aralkyl oder eine funktionelle Gruppe $-X-Y-R^1$ steht und X, Y und $R^1$ die zuvor angegebenen Bedeutungen besitzen, hergestellt. Bevorzugt steht $R^7$ für Wasserstoff. Ganz besonders bevorzugt handelt es sich bei den Monomeren B um die Ester $\alpha,\beta$-ethylenisch ungesättigter $C_3$-$C_8$-Mono-

oder Dicarbonsäuren mit Alkoholen, die eine Carbonylgruppe tragen, oder um die Amide der genannten Carbonsäuren, die am Stickstoff einen oder zwei Substituenten tragen, welche eine Carbonylgruppe aufweisen. Geeignete α,β-ethylenisch ungesättigte $C_3$-$C_8$-Carbonsäuren sind z.B. Acrylsäure, Methacrylsäure, Crotonsäure, Maleinsäure, Itaconsäure, Citraconsäure oder Fumarsäure. Geeignete Alkohole sind z.B. Hydroxyaceton, 1-Hydroxybutan-2-on, 3-Hydroxybutan-2-on, 4-Hydroxybutan-2-on, 4-Hydroxypentan-2-on, p-Hydroxyacetonphenon etc. Geeignete Substituenten am Amidstickstoff sind z.B. Acetonyl, 2-Oxobut-3-yl, 2-Oxobut-4-yl, 2-Oxopent-4-yl oder p-Acetylphenyl. Speziell werden Bisacetonylacrylamid oder Bisacetonylmethacrylamid als Monomere B verwendet. Derartige Monomere machen vorzugsweise 0,1 bis 10 Gew.-% der Gesamtmonomermenge aus.

Geeignete Monomere A sind ausgewählt unter vinylaromatischen Monomeren wie Styrol, α-Methylstyrol, ortho-Chlorstyrol oder Vinyltoluole, $C_1$-$C_{12}$-Alkylvinylether, wie Methyl-, Ethyl-, n-Propyl-, i-Propyl-, n-Butyl-, i-Butyl-, 2-Ethylhexylvinylether, Vinylester von $C_1$-$C_{18}$-Monocarbonsäuren wie Vinylacetat, Vinylpropionat, Vinylbutyrat, Vinylvalerat, Vinylhexanoat, Vinyl-2-ethylhexanoat, Vinyldecanoat, Vinyllaurat und Vinylstearat. Weiterhin kommen Ester α,β-ethylenisch ungesättigter $C_3$-$C_8$-Mono- oder Dicarbonsäuren mit $C_1$-$C_{12}$-, vorzugsweise $C_1$-$C_8$- und insbesondere $C_1$-$C_4$-Alkanolen oder $C_5$-$C_8$-Cycloalkanole in Frage. Geeignete $C_1$-$C_{12}$-Alkanole sind beispielsweise Methanol, Ethanol, n-Propanol, i-Propanol, 1-Butanol, 2-Butanol, iso-, tert.-Butanol, n-Hexanol und 2-Ethylhexanol. Geeignete Cycloalkanole sind beispielsweise Cyclopentanol oder Cyclohexanol. Geeignet sind insbesondere Ester der Acrylsäure, der Methacrylsäure, der Crotonsäure, der Maleinsäure, der Itaconsäure, der Citraconsäure oder der Fumarsäure. Speziell handelt es sich um (Meth)acrylsäuremethylester, (Meth)acrylsäureethylester, (Meth)acrylsäure-n-butylester, (Meth)acrylsäureisobutylester, (Meth)acrylsäure-1-hexylester, (Meth)acrylsäure-2-ethylhexylester, Maleinsäuredimethylester oder Maleinsäuredi-n-buylester. Weiterhin kommen Nitrile α,β-monoethylenisch ungesättigter $C_3$-$C_8$-Carbonsäuren, wie Acrylnitril oder Methacrylnitril in Betracht. Darüber hinaus können auch $C_4$-$C_8$-konjugierte Diene, wie 1,3-Butadien, Isopren oder Chloropren eingesetzt werden.

Die genannten Monomere bilden üblicherweise den Hauptanteil A1 der Monomere A und machen vorzugsweise 80 bis 99,9 Gew.-%, insbesondere 90 bis 99,9 Gew.-% und speziell 95 bis 99,7 Gew.-% der Monomere A aus.

Die Monomere A umfassen auch modifizierende Monomere A2, deren Homopolymerisate eine erhöhte Wasserlöslichkeit oder Wasserdispergierbarkeit aufweisen. Diese Monomere werden vorzugsweise in Mengen von 0,1 bis 20 Gew.-%, insbesondere 0,1 bis 10 Gew.-% und speziell 0,2 bis 2 Gew.-%, bezogen auf die Menge an Monomeren A mit einpolymerisiert. Derartige Monomere erhöhen insbesondere die Pigmentbindekraft der Bindemittelpolymerisate. Hierzu zählen unter anderem Monomere, die saure Gruppen enthalten wie α,β-monoethylenische ungesättigte Mono- und Dicarbonsäuren mit 3 bis 10 C-Atomen sowie aliphatische oder aromatische Vinylsulfonsäuren und deren wasserlösliche Salze. Hier ist jedoch zu beachten, daß ein hoher Gehalt an Säuregruppen im Bindemittelpolymerisat die Wasserfestigkeit von Beschichtungen herabsetzt. Aus diesem Grunde werden derartige saure Monomere vorzugsweise nur in Mengen von weniger als 1 Gew.-% und insbesondere überhaupt nicht eingesetzt. Bevorzugt werden jedoch nichtionische modifizierende Monomere wie die Amide, die N-Alkylolamide oder die Hydroxyalkylester der genannten Carbonsäuren, beispielsweise Acrylamid, Methacrylamid, N-Methylolacrylamid, N-Methylolmethacrylamid, Hydroxyethylacrylat, Hydroxyethylmethacrylat, Hydroxypropylacrylat, Hydroxypropylmethacrylat etc. verwendet.

Weiterhin können vernetzende Monomere A3 einpolymerisiert werden. Diese werden in untergeordneter Menge, in der Regel bis 5 Gew.-% und insbesondere bis 1 Gew.-%, bezogen auf die Menge der Monomere A, mit einpolymerisiert. Hierbei handelt es sich vorzugsweise um Monomere, die zwei nicht-konjugierte, ethylenisch ungesättigte Bindungen aufweisen, z.B. die Diester zweiwertiger Alkohole mit α,β-monoethylenischen ungesättigten $C_3$-$C_8$-Carbonsäuren, z.B. Glykolbisacrylat oder Ester von α,β-ungesättigten Carbonsäuren mit Alkenolen, z.B. Bicyclodecenyl(meth) acrylat.

Die Bindemittelpolymerisate können auch weitere Monomere enthalten, die den jeweiligen Beschichtungsmassen eine höhere Festigkeit verleihen. Hier sind beispielsweise Siloxangruppen enthaltende Monomere, wie die Vinyltrialkoxysilane, z.B. Vinyltrimethoxysilan, Alkylvinyldialkoxysilane oder (Meth)acryloxyalkyltrialkoxysilane, z.B. (Meth)acryloxyethyltrimethoxysilan, (Meth)-acryloxypropyltrimethoxysilan zu nennen. Die genannten Monomere können in Mengen von bis zu 1 Gew.-%, vorzugsweise 0,05 bis 0,5 Gew.-%, bezogen auf die Menge an Monomeren A, verwendet werden.

Weiterhin hängt die Eigenschaft der Beschichtungsmassen von der Glasübergangstemperatur (DSC, midpoint temperature, ASTM D 3418-82) ab. Ist sie zu niedrig, bleibt die Beschichtung auch nach dem Aushärten klebrig. Liegt sie zu hoch, weist die Beschichtungsmasse keine ausreichende Festigkeit auf und verliert ihre Elastizität bei tiefen Temperaturen. Die Glasübergangstemperatur der in Frage kommenden Bindemittelpolymerisate liegt daher unterhalb 10°C. Im allgemeinen liegt sie jedoch oberhalb -60°C, vorzugsweise oberhalb -45°C und insbesondere oberhalb -35°C. Hierbei erweist es sich als hilfreich, die Glasübergangstemperatur $T_G$ des dispergierten Polymerisats abzuschätzen. Nach Fox (T.G. Fox, Bull. Am. Phys. Soc. (Ser. II) 1, 123 [1956] und Ullmanns Encyklopädie der technischen Chemie, Weinheim (1980), S. 17, 18) gilt für die Glasübergangstemperatur von Mischpolymerisaten bei großen Molmassen in guter Nährung

$$\frac{1}{T_g} = \frac{X^1}{T_g^{\,1}} + \frac{X^2}{T_g^{\,2}} + \cdots \frac{X^n}{T_g^{\,n}}$$

wobei $X^1$, $X^2$, ..., $X^n$ die Massenbrüche 1, 2, ..., n und $Tg^1$, $T_g^2$, ..., $T_g^n$ die Glasübergangstemperaturen der jeweils nur aus einem der Monomeren 1, 2, ..., n aufgebauten Polymeren in Grad Kelvin bedeuten. Letztere sind z.B. aus Ullmann's Encyclopedia of Industrial Chemistry, VCH, Weinheim, Vol. A 21 (1992) S. 169 oder aus J. Brandrup, E.H. Immergut, Polymer Handbook 3rd ed, J. Wiley, New York 1989 bekannt.

Aus dem gesagten wird deutlich, daß die Glastemperatur eines Polymerisats sowohl durch ein geeignetes Hauptmonomer A1, das eine Glastemperatur im gewünschten Bereich aufweist, als auch durch Kombination wenigstens eines Monomers mit hoher Glasübergangstemperatur und wenigstens eines Monomers mit niedriger Glasübergangstemperatur eingestellt werden kann. In einer bevorzugten Ausführungsform setzen sich die Monomere A1 aus 5 bis 50 Gew.-% wenigstens einem Monomer, dessen Homopolymerisat eine Glasübergangstemperatur oberhalb 50°C aufweist, und 50 bis 95 Gew.-% wenigstens einem Monomer, dessen Homopolymerisat eine Glasübergangstemperatur < 0°C aufweist, zusammen.

Die Herstellung der erfindungsgemäß zur Anwendung kommenden wäßrigen Polymerisatdispersionen erfolgt vorzugsweise durch radikalische wäßrige Emulsionspolymerisation der genannten Monomere A und B in Gegenwart wenigstens eines radikalischen Polymerisationsinitiators und gegebenenfalls einer grenzflächenaktiven Substanz. In einer Ausführungsform der vorliegenden Erfindung werden Polymerisate verwendet, die durch Polymerisation in Abwesenheit grenzflächenaktiver Substanzen erhältlich sind.

Als radikalische Polymerisationsinitiatoren kommen alle diejenigen in Betracht, die in der Lage sind, eine radikalische wäßrige Emulsionspolymerisation auszulösen. Es kann sich dabei sowohl um Peroxide, z.B. Alkalimetallperoxodisulfate als auch um Azoverbindungen handeln. Es werden auch kombinierte Systeme verwendet, die aus wenigstens einem organischen Reduktionsmittel und wenigstens einem Peroxid und/oder Hydroperoxid zusammengesetzt sind, z.B. tert.-Butylhydroperoxid mit dem Natriumsalz der Hydroxymethansulfinsäure oder Wasserstoffperoxid mit Ascorbinsäure. Auch werden kombinierte Systeme verwendet, die eine geringe Menge einer im Polymerisationsmedium löslichen Metallverbindung enthalten, deren metallische Komponente in mehreren Wertigkeitsstufen auftreten kann, z.B. Ascorbinsäure/Eisen(II)sulfat/Wasserstoffperoxid, wobei anstelle von Ascorbinsäure auch häufig das Natriumsalz der Hydroxymethansulfinsäure, Natriumsulfit, Natriumhydrogensulfit oder Natriumbisulfit und anstelle von Wasserstoffperoxid tert.-Butylhydroperoxid oder Alkaliperoxodisulfate und/oder Ammoniumperoxodisulfat verwendet werden. Vorzugsweise beträgt die Menge der eingesetzten radikalischen Initiatorsysteme, bezogen auf die Gesamtmenge der zu polymerisierenden Monomeren, 0,1 bis 2 Gew.-%.

Für die Durchführung der Emulsionspolymerisation geeignete grenzflächenaktive Substanzen sind die üblicherweise für diese Zwecke eingesetzten Schutzkolloide und Emulgatoren. Die grenzflächenaktiven Substanzen werden üblicherweise in Mengen bis zu 10 Gew.-%, vorzugsweise 0,5 bis 5 Gew.-% und insbesondere 0,5 bis 3 Gew.-%, bezogen auf die zu polymerisierenden Monomere eingesetzt.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart 1961, S. 411-420. Auch Gemische aus Emulgatoren und/oder Schutzkolloiden können verwendet werden. Vorzugsweise werden als grenzflächenaktive Substanzen ausschließlich Emulgatoren eingesetzt, deren relative Molekulargewichte im Unterschied zu den Schutzkolloiden üblicherweise unter 2000 liegen. Sie können sowohl anionischer, kationischer als auch nichtionischer Natur sein. Zu den anionischen Emulgatoren zählen Alkali- und Ammoniumsalze von Alkylsulfaten (Alkylrest: $C_8$-$C_{12}$), von Schwefelsäurehalbestern ethoxylierter Alkanole (EO-Grad: 2 bis 50, Alkylrest: $C_{12}$ bis $C_{18}$) und ethoxylierter Alkylphenole (EO-Grad: 3 bis 50, Alkylrest: $C_4$-$C_9$), von Alkylsulfonsäuren (Alkylrest: $C_{12}$-$C_{18}$) und von Alkylarylsulfonsäuren (Alkylrest: $C_9$ bis $C_{18}$). Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208).

Bevorzugte anionische grenzflächenaktive Substanzen sind Verbindungen der allgemeinen Formel II,

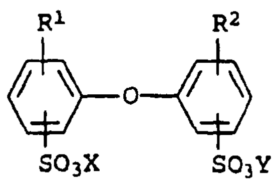

(II)

worin $R^1$ und $R^2$ Wasserstoff oder $C_4$-$C_{24}$-Alkyl bedeuten und nicht gleichzeitig Wasserstoff sind, und X und Y Alkalimetallionen und/oder Ammoniumionen sein können. In der Formel II bedeuten $R^1$ und $R^2$ bevorzugt lineare oder verzweigte Alkylreste mit 6 bis 18 C-Atomen oder Wasserstoff, und insbesondere mit 6, 12 und 16 C-Atomen, wobei $R^1$ und $R^2$ nicht beide gleichzeitig Wasserstoff sind. X und Y sind bevorzugt Natrium, Kalium oder Ammonium, wobei Natrium besonders bevorzugt ist. Besonders vorteilhaft sind Verbindungen II, in denen X und Y Natrium, $R^1$ ein verzweigter Alkylrest mit 12 C-Atomen und $R^2$ Wasserstoff oder gleich $R^1$ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company). Die Verbindungen II sind allgemein bekannt, z.B. aus der US-A 4,269,749, und im Handel erhältlich.

Vorzugsweise werden neben den genannten ionischen Emulgatoren wenigstens ein nichtionischer Emulgator in Mengen von vorzugsweise 0 bis 10 Gew.-%, insbesondere 0,5 bis 8 Gew.-% und besonders bevorzugt 1 bis 4 Gew.-%, jeweils bezogen auf die Gesamtmonomermenge verwendet. Geeignete nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: $C_4$-$C_9$), Ethoxylate langkettiger Alkohole (EO-Grad: 3 bis 50, Alkylrest: $C_8$-$C_{36}$), sowie Polyethylenoxid/Polypropylenoxid-Blockcopolymere. Bevorzugt werden Ethoxylate langkettiger Alkanole (Alkylrest: $C_{10}$-$C_{22}$, mittlerer Ethoxylierungsgrad: 10 bis 50) und darunter besonders bevorzugt solche mit einem linearen $C_{12}$-$C_{18}$-Alkylrest.

Das Molekulargewicht der Polymerisate kann durch Zugabe geringer Mengen, in der Regel bis zu 2 Gew.-%, bezogen auf die zu polymerisierenden Monomere, einer oder mehrerer, das Molekulargewicht regelnder Substanzen, z.B. organische Thioverbindungen, Silane, Allylalkohole oder Aldehyde eingestellt werden.

Die Emulsionspolymerisation kann sowohl kontinuierlich als auch nach der Batchfahrweise, vorzugsweise nach einem halbkontinuierlichen Verfahren erfolgen. Dabei können die zu polymerisierenden Monomere kontinuierlich, einschließlich Stufen- oder Gradientenfahrweise, dem Polymerisationsansatz zugeführt werden.

Neben der saatfreien Herstellungsweise kann zur Einstellung einer definierten Polymerteilchengröße die Emulsionspolymerisation nach dem Saatlatex-Verfahren oder in Gegenwart von in situ hergestellten Saatlatex erfolgen. Verfahren hierzu sind bekannt und können dem Stand der Technik entnommen werden (siehe EP-B 40419 sowie 'Encyclopedia of Polymer Science and Technology', Vol. 5, John Wiley & Sons Inc., New York 1966, S. 847).

Polymerisationsdruck und Polymerisationstemperatur sind von untergeordneter Bedeutung. Im allgemeinen arbeitet man bei Temperaturen zwischen Raumtemperatur und 120°C, vorzugsweise bei Temperaturen von 40 bis 95°C und besonders bevorzugt zwischen 50 und 90°C.

Im Anschluß an die eigentliche Polymerisationsreaktion ist es gegebenenfalls erforderlich, die erfindungsgemäßen wäßrigen Polymerisatdispersionen weitgehend frei von Geruchsträgern, wie Restmonomeren und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Die Absenkung der Restmonomere kann weiterhin chemisch durch radikalische Nachpolymerisation, insbesondere unter Einwirkung von Redoxinitiatorsystemen, wie sie z.B. in der DE-A 44 35 423, DE-A 44 19 518 sowie in der DE-A 44 35 422 aufgeführt sind, erfolgen.

Die Herstellung der Polymerisate, die erst nachträglich mit den funktionellen Gruppen versehen werden (s.o.), kann nach den üblichen Polymerisationsverfahren für ethylenisch ungesättigte Monomere, vorzugsweise durch radikalische wäßrige Emulsionspolymerisation erfolgen. Als Monomere kommen im Prinzip alle die unter A genannten in Frage mit der Maßgabe, daß in ausreichender Menge Monomere, vorzugsweise 0,1 bis 15 Gew.-%, mit einpolymerisiert werden, die funktionelle Gruppen aufweisen, welche die gewünschte polymeranaloge Reaktion (s.o.) eingehen können. Hierfür kommen insbesondere Diene und die unter A2 genannten Monomere in Betracht. Werden die Polymerisate durch Emulsionspolymerisation hergestellt, gilt für die Reaktionsbedingungen (Emulgatoren, Initiatoren, Fahrweise, Reaktionsdruck und -temperatur) das obengesagte.

Als Komponente b) enthält die erfindungsgemäße Bindemittelzubereitung wenigstens eine Verbindung, die wenigstens zwei oder mehr $NH_2$-Gruppen pro Molekül aufweist. Unter $NH_2$-Gruppen sind die Aminofunktionen primärer Amine als auch die $NH_2$-Gruppen in Hydraziden von Carbon- oder Sulfonsäuren, oder von Hydrazonen zu verstehen. Geeignete Amine sind beispielsweise Diamine, wie sie auch in der Synthese von Polyamiden verwendet werden. Geeignete Diamine sind beispielsweise aliphatische Diamine mit 4 bis 16 Kohlenstoffatomen, insbesondere 6 bis 12 Kohlenstoffatomen, wie Hexamethylendiamin, dessen Alkylderivate wie z.B. 2-Methylhexamethylendiamin, 3-Methylhexamethylendiamin sowie Bis-(4-aminocyclohexyl)methan oder Bis-(4-aminocyclohexyl)propan. Weiterhin geeignet sind $C_4$-$C_{20}$-Alkylendiamine, in denen die Alkyleneinheit durch ein oder mehrere Sauerstoffatome oder durch ein oder mehrere NH bzw. N-$C_1$-$C_4$-Alkylgruppen unterbrochen ist, beispielsweise 1,10-Diamino-4,7-dioxadecan, 1,12-Diamino-4,9-dioxadodecan, Diethylentriamin, Triethylentetramin, Dipropylentriamin, 1,7-Diamino-4-azamethylheptan, sowie $C_4$-$C_{20}$-Alkoxydiamine wie Bisaminooxybutan. Vorzugsweise werden als Komponente b) Di- oder Polyhydrazide einer Di- oder Polycarbonsäure verwendet. Insbesondere werden die Dihydrazide von Dicarbonsäuren verwendet. Geeignete Dihydrazide leiten sich insbesondere von aliphatischen $C_2$-$C_{14}$-Dicarbonsäuren oder aromatischen $C_8$-$C_{22}$-Dicarbonsäuren ab. Geeignete aliphatische $C_2$-$C_{14}$-Dicarbonsäuren sind beispielsweise Oxalsäure, Malonsäure, Bernsteinsäure,

Glutarsäure, Adipinsäure, Pimelinsäure, Suberinsäure, Acelainsäure oder Sebazinsäure. Ebenfalls bevorzugt sind die Dihydrazide aromatischer Dicarbonsäuren, beispielsweise das Dihydrazid der Phthalsäure, der Isophthalsäure, Terephthalsäure, 1,4-, 1,5-, 2,6-Naphthalindicarbonsäure, 4,4-Diphenylsulfondicarbonsäure, 4,4-Diphenylmethandicarbonsäure, 4,4'-Diphenyl-2,2-propandicarbonsäure etc. Die Hydrazide der genannten Dicarbonsäuren können alleine oder in Mischung oder aber auch in Mischung mit Diaminen eingesetzt werden. Die Komponente b) kann darüber hinaus auch die Verbindungen mit mehr als zwei $NH_2$-Gruppen aufweisen. Jedoch werden diese Verbindungen nur in untergeordnetem Maße eingesetzt. In einer speziellen Ausführungsform wird Adipinsäuredihydrazid als alleinige Komponente b) eingesetzt.

Die Komponente b), die in Mengen von 0,01 bis 10 Gew.-%, vorzugsweise 0,2 bis 5 Gew.-%, bezogen auf das Polymerisat verwendet wird, kann entweder direkt der Polymerisatdispersion oder erst bei der Herstellung der Beschichtungsmasse zugegeben werden. Das vorteilhafte Zusammenwirken der Komponente a) und der Komponente b) in den erfindungsgemäßen Beschichtungsmassen beruht vermutlich darauf, daß sich die vernetzende Komponente b) nicht in der Polymerphase, sondern in erster Linie in der wäßrigen Phase befindet. Es ist daher anzunehmen, daß es zu der vernetzenden Reaktion zwischen den $NH_2$-Gruppen der Komponente b) und den reaktiven Zentren des Polymerisat erst dann kommt, wenn durch Verdampfen der Wasserphase, also beim Abbinden der Beschichtungsmasse, die Konzentration der Teilchen ansteigt. Eine weitere Folge hiervon ist, daß die Reaktion in erster Linie an den reaktiven Zentren im Polymer stattfindet, die sich auf der Oberfläche der Polymerisatteilchen befinden. Es kommt somit in erster Linie zu einer Vernetzung zwischen den Polymerisatteilchen, nicht aber innerhalb der Polymerisatteilchen. Hierdurch wird einerseits die Festigkeit der Polymerisatfilme, die ihrerseits für die Festigkeit der Beschichtungsmassen verantwortlich ist, erhöht. Gleichzeitig bleibt jedoch die Hauptmenge an Polymerisat im Polymerisatteilchen unvernetzt, was zu einer erhöhten Flexibilität der polymeren Massen und damit auch der Beschichtungsmassen führt.

Erfindungsgemäß werden die Zubereitungen aus den Komponenten a) und b) als Bindemittel für Beschichtungsmassen verwendet. Unter Beschichtungsmassen versteht man beispielsweise Kunststoffdispersionsputze, Fliesenkleber, Anstrichmittel, Dichtmassen oder Versiegelungsmassen, insbesondere für poröse Bauteile. Besonders bevorzugt werden die erfindungsgemäßen Zubereitungen als Bindemittel in Dachbeschichtungsmassen für Polyurethanschäume verwendet.

Solche Beschichtungsmassen enthalten in der Regel 40 bis 95 Gew.-%, vorzugsweise 60 bis 90 Gew.-% und insbesondere 65 bis 85 Gew.-% nicht flüchtige Bestandteile. Davon entfallen etwa 10 bis 95,5 Gew.-%, vorzugsweise 10 bis 50 Gew.-% und insbesondere 20 bis 40 Gew.-% auf die im Bindemittel enthaltenen Feststoffanteile, 0,01 bis 60 Gew.-%, vorzugsweise 4 bis 60, insbesondere 20 bis 60 Gew.-%, besonders bevorzugt 30 bis 55 Gew.-% auf Füllstoffe, 0 bis 60 Gew.-%, vorzugsweise 0 bis 20 Gew.-%, auf Pigmente und 0,5 bis 25 Gew.-%, vorzugsweise 1 bis 10 Gew.-%, auf Hilfsmittel.

Geeignete Füllstoffe sind beispielsweise Alumosilikate, Silikate, Erdalkalicarbonate, vorzugsweise Calciumcarbonat in Form von Calcit oder Kreide, Dolomit sowie Aluminiumsilikate oder Magnesiumsilikate wie Talk.

Ein typisches Pigment ist beispielsweise Titandioxid, vorzugsweise in der Rutilform. Die Beschichtungsmassen können jedoch, insbesondere wenn sie zu dekorativen Zwecken verwendet werden, auch farbige Pigmente, beispielsweise Eisenoxide enthalten.

Zu den üblichen Hilfsmitteln zählen Photosensibilisatoren, wie Benzophenon, Netzmittel, wie Natrium- oder Kaliumpolyphosphate, Polyacrylsäuren, deren Alkalisalze, Polyvinylalkohole etc. Darüber hinaus enthalten diese Beschichtungsmassen in der Regel Stoffe, die die Viskosität modifizieren, beispielsweise Celluloseether, wie Hydroxyethylcellulose. Weiterhin können den Beschichtungsmassen Dispergiermittel, Entschäumer, Konservierungsoder Hydrophobiermittel, Biozide, Farbstoffe, Fasern oder weitere Bestandteile zugesetzt werden. Auch können die Beschichtungsmassen zur Einstellung der Filmbildeeigenschaften der Bindemittelpolymerisate Weichmacher enthalten.

Die erfindungsgemäßen Beschichtungsmassen können 0,1 bis 5 Gew.-% photoempfindliche Initiatoren enthalten. Diese dienen dazu, in der Oberfläche der Beschichtung Vernetzungsreaktionen hervorzurufen und somit die Klebrigkeit der Oberfläche zu verringern. Die Verwendung von Photoinitiatoren in Beschichtungsmassen ist beispielsweise in der EP-A 010 000, der DE-A 4 318 083 oder der EP-A 624 610 beschrieben. Geeignete Photosensibilisatoren enthalten eine Gruppe, die in der Lage ist, einen Teil des Sonnenlichts zu absorbieren. Der Photoinitiator kann sowohl in Form einer photoempfindlichen Verbindung, als auch in Form eines photoempfindlichen Oligomers oder Polymers als Additiv zu dem Bindemittel gegeben werden. Ebenso ist es möglich, die photoempfindliche Gruppe chemisch an das Polymer, beispielsweise durch Copolymerisation zu binden.

Bevorzugte photoempfindliche Verbindungen sind Benzophenonderivate, in denen gegebenenfalls einer oder beide Phenylringe substituiert sind, beispielsweise mit $C_1$-$C_4$-Alkyl, Hydroxy, Chlor, Carboxy-$C_1$-$C_4$-alkyl, Nitro, Amino etc. Beispiele für geeignete Benzophenonderivate umfassen 4-Methylbenzophenon, 4-Hydroxybenzophenon, 4-Aminobenzophenon, 4-Chlorbenzophenon, 4-Carboxybenzophenon, 4,4'-Dimethylbenzophenon, 4,4'-Dichlorbenzophenon, 4-Carboxymethylbenzophenon, 3-Nitrobenzophenon. Ebenfalls geeignet sind substituierte Phenylketone, z.B. substituierte Phenylacetophenone und ähnliche. Besonders bevorzugt wird Benzophenon oder 4-substituiertes Benzophenon. Derartige Photoinitiatoren werden, sofern erwünscht, in Mengen von 0,1 bis 5 Gew.-%, bezogen auf das Bindemittelpolymerisat, verwendet.

Polymerisate, die photosensible Gruppen in chemisch gebundener Form enthalten, werden beispielsweise durch Copolymerisation mit Monomeren, die photosensible Gruppen aufweisen, hergestellt. Derartige Comonomere werden in der Regel in Mengen von 0,5 bis 5 Gew.-%, bezogen auf die zu polymerisierenden Monomere, verwendet. Polymere, die photoempfindliche Gruppen enthalten, sind beispielsweise in der US-A 3,429,852, der US-A 3,574,617 oder der US-A 4,148,987 offenbart. Geeignete Monomere umfassen Allylbenzoyibenzoate oder Vinylbenzoylbenzoate. Bevorzugt wird Vinylbenzylmethylbenzoylbenzoat, Hydroxymethacryloxypropylmethylbenzoylbenzoat, Hydroxymethacryloxypropylbenzoylbenzoat und Hydroxymethacryloxypropoxybenzophenon.

Die erfindungsgemäßen Beschichtungsmassen zeichnen sich durch eine hohe Haftungsfähigkeit auf hydrophoben Substraten wie Polyurethanschäumen sowohl im feuchten wie auch im trockenen Zustand aus. Die Oberfläche der Beschichtungen ist nicht klebrig und zeigt nur eine geringe Neigung zur Schmutzaufnahme. Die Beschichtungen weisen neben einer hohen Reißfestigkeit eine ebenfalls hohe Dehnbarkeit auf. Ihre Neigung zur Aufnahme von Wasser ist gering.

Überraschenderweise hat sich gezeigt, daß die erfindungsgemäßen Bindemittelzubereitungen für die Herstellung von Dichtungsmassen geeignet sind. Die erfindungsgemäßen Dichtungsmassen sind beispielsweise zum Abdichten von Rissen, Sprüngen oder Fugen oder zum Füllen von Löchern oder Vertiefungen geeignet. Aufgrund ihrer hohen Dehnbarkeit oder Reißfestigkeit sowie ihrer guten Haftfestigkeit auf Substraten mit unterschiedlicher Polarität, lassen sich mit derartigen Dichtungsmassen insbesondere Dehnungsfugen (Fugen, die durch Aufeinandertreffen unterschiedlicher Bauteile entstehen und deren Fugenbreite aufgrund mechanischer oder thermischer Effekte sich ändern kann), abdichten. Die erfindungsgemäßen Dichtungsmassen eignen sich beispielsweise zum Abdichten von Fugen zwischen Fensterrahmen und Fensterglas, dem Abdichten von Fugen zwischen Mauerwerkeinbauten, wie Fenstern, Türen oder Lüftungsgittern und dem Mauerwerk selber, dem Abdichten von Fugen zwischen Fliesen oder Fliesen und Sanitäreinbauten etc.

Solche Dichtungsmassen enthalten in der Regel 50 bis 95 Gew.-%, vorzugsweise 60 bis 90 Gew.-% und insbesondere 65 bis 85 Gew.-% nichtflüchtige Bestandteile. Davon entfallen etwa 10 bis 95,5 Gew.-%, vorzugsweise 10 bis 50 Gew.-% und insbesondere 20 bis 40 Gew.-% auf die im Bindemittel enthaltenen Feststoffanteile der Komponenten a) und b) 4 bis 60 Gew.-%, insbesondere 20 bis 60 Gew.-%, und besonders bevorzugt 30 bis 55 Gew.-% auf Füllstoffe, 0 bis 60 Gew.-%, vorzugsweise 0 bis 20 Gew.-%, auf Pigmente und 0,5 bis 25 Gew.-%, vorzugsweise 1 bis 10 Gew.-% auf die obengenannten Hilfsmittel. Als Füllstoffe und Pigmente sind die obengenannten Füllstoffe und Pigmente geeignet. Die jeweilige Zusammensetzung hängt auf eine dem Fachmann bekannte Weise vom jeweiligen Verwendungszweck ab.

Die im folgenden angegebenen Beispiele sollen die Erfindung verdeutlichen, ohne sie jedoch einzuschränken.

1. Herstellung und Charakterisierung der Polymerisatdispersionen

Die Teilchengröße (Z-Mittelwert) der Polymerisatteilchen wurde durch dynamische Lichtstreuung an einer 0,01 gew.-%igen Dispersion bei 23°C mittels eines Autosizer IIc der Fa. Malvern Instruments, England, ermittelt. Angegeben wird der mittlere Durchmesser der Kumulantenauswertung (cumulant z-average) der gemessenen Autokorrelationsfunktion.

Vergleichsbeispiel 1

In einem Gefäß mit Rührer und Rückflußkühler wurden 250 Teile entionisiertes Wasser und 1,26 Teile einer 1,4%igen Lösung von Na-Fe-EDTA-Komplex in Wasser vorgelegt. Anschließend spülte man mit Inertgas und erwärmt auf 70°C. Bei Erreichen der Temperatur wurden 21,5 Teile des Zulaufs 1, 17,7 Teile von Zulauf 2 und 15,7 Teile von Zulauf 3 in den Reaktor gegeben. Anschließend wurde 30 min anpolymerisiert. Die verbleibende Menge von Zulauf 1 wurde dann innerhalb 3 h und die verbleibende Menge von Zulauf 2 und Zulauf 3 gleichzeitig beginnend innerhalb 4 h in den Reaktor gegeben. Anschließend ließ man bei 70°C eine Stunde nachreagieren. Danach gab man zur Verringerung des Restmonomerengehaltes 1,14 g einer 70 Gew.-%igen, wäßrigen Lösung von t-Butylhydroperoxid und 6,11 g einer 13,1 Gew.-%igen, wäßrigen Lösung des Bisulfitadduktes von Aceton zu und ließ 30 min. bei 70°C nachreagieren. Man ließ auf Raumtemperatur abkühlen und stellte den pH-Wert mit 10%iger Natronlauge auf 8,0 ein. Die erhaltene Dispersion wies einen Feststoffgehalt von 55,3 Gew.-% auf. Der mittlere Teilchendurchmesser betrug 260 nm.

Zulauf 1:

Emulsion aus

| | |
|---|---|
| 179 Teilen | Wasser |
| 17,78 Teilen | Dowfax® 2A1 (45 Gew.-%ige Lösung in Wasser) |
| 60 Teile | eines ethoxylierten $C_{16}$-$C_{18}$-Fettalkohols mit einem mittleren Ethoxylierungsgrad von 18 (20 Gew.-%ige Lösung in Wasser) |
| 160 Teile | 2-Ethylhexylacrylat |
| 520 Teile | n-Butylacrylat |
| 120 Teile | Methylmethacrylat |
| 16 Teile | Methacrylsäure (50 Gew.-%ige Lösung in Wasser) |

Zulauf 2:

| | |
|---|---|
| 18,3 Teile | Acetonbisulfit (13,1 Gew.-%ige Lösung in Wasser) |
| 70 Teile | Wasser |

Zulauf 3:

| | |
|---|---|
| 3,4 Teile | t-Butylhydroperoxid (70 Gew.-%ige Lösung in Wasser) |
| 70 Teile | Wasser. |

Vergleichsbeispiel 2

Die Dispersion aus Vergleichsbeispiel 1 wurde mit 0,45 Gew.-% (bezogen auf den polymeren Feststoffanteil der Dispersion) Adipinsäuredihydrazid versetzt.

Beispiel 1

Die Herstellung der Polymerisatdispersion erfolgte wie in Vergleichsbeispiel 1 beschrieben, jedoch setzte sich Zulauf 1 wie folgt zusammen:

| | |
|---|---|
| 179 Teile | Wasser |
| 17,78 Teile | Dowfax®2A1 (45 gew.-%ige Lösung in Wasser) |
| 60 Teile | ethoxylierter $C_{16}$-$C_{18}$-Fettalkohol mit einem mittleren Ethoxylierungsgrad von 18 (20 gew.-%ige Lösung in Wasser) |
| 152 Teile | 2-Ethylhexylacrylat |
| 520 Teile | n-Butylacrylat |
| 104 Teile | Methylmethacrylat |
| 24 Teile | Diacetonacrylamid |
| 16 Teile | Methacrylsäure (50 gew.-%ige Lösung in Wasser). |

Die erhaltene Dispersion wies einen Feststoffgehalt von 55 Gew.-% und einen pH-Wert von 8,3 auf. Der mittlere Polymerisatteilchendurchmesser ($d_{50}$-Wert) betrug 280 nm.

Beispiel 2

Die Dispersion aus Beispiel 1 wurde mit 0,225 Gew.-% Adipinsäuredihydrazid (ADDH; bezogen auf den polymeren Feststoffanteil der Dispersion) versetzt.

Beispiel 3

Die Dispersion aus Beispiel 1 wurde mit 0,45 Gew.-% ADDH (bezogen auf polymeren Feststoffanteil der Dispersion) versetzt.

2. Herstellung der Beschichtungsmassen

Die Herstellung der erfindungsgemäßen Beschichtungsmassen erfolgte durch Abmischen der im folgenden angegebenen Komponenten in der angegebenen Reihenfolge mit den Dispersionen aus den Beispielen 1 bis 3 sowie den Vergleichsbeispielen 1 und 2 in einem Dissolver.

| | |
|---|---|
| Dispersion (55%ig) | 32,2 Teile |
| Entschäumer[1] | 0,5 Teile |
| Propylenglykol | 2,3 Teile |
| Dispergiermittel[2] | 0,5 Teile |
| Titanpigment (Rutil, 0,3 µ) | 11,5 Teile |
| Calciumcarbonat (10 µm) | 27,0 Teile |
| Calciumcarbonat (2 µm) | 1,4 Teile |
| Talk (6 µm) | 8,5 Teile |
| handelsübliches Biozid[3] | 0,2 Teile |
| Dispersion (55%ig) | 14,0 Teile |
| Entschäumer[1] | 0,5 Teile |
| Wasser | 1,5 Teile |

[1] Entschäumer BYK 035 (BYK Chemie, Wallingford CT, USA)
[2] Dispergiermittel Calgon® TK, BK-Ladenburg GmbH, Deutschland
[3] 1,2-Benzoisothiazolin-3-on

3. Haftungstest

Blöcke aus handelsüblichem Polyurethanschaum für Dachkonstruktionen (roof grade 31b/cubic feet) der American Coatings of Greensboro (Greensboro, North Carolina) wurden auf einer Fläche > 25,4 mm x 250 mm mit den Beschichtungsmassen aus 2. beschichtet. Anschließend wurde ein Glasfasergewebe mit den Abmessungen 25,4 mm x 250 mm längs über die bestrichene Fläche gelegt. Nach 4 h bei Raumtemperatur wurde auf das Glasfasergewebe eine weitere Beschichtung mit den erfindungsgemäßen Beschichtungsmassen aufgebracht und 14 Tage bei Raumtemperatur getrocknet. Die Haftfestigkeit gilt als die Kraft pro Flächeneinheit, die notwendig ist, um das Glasfasergewebe von der Polyurethanfläche zu entfernen. Die Bestimmung dieser Kraft erfolgte durch Zug im Winkel von 180° zum aufgeklebten Glasfasergewebe mit einer Zuggeschwindigkeit von 2 inches/Minute. Für die Haftung in feuchtem Zustand wurde der Probekörper 14 Tage mit der zu prüfenden Fläche in Wasser getaucht und dann getestet. Die Ergebnisse sind in Tabelle 1 zusammengefaßt.

4. Reißfestigkeit und Dehnbarkeit

Die Beschichtungsmassen wurden mit einem Rakel auf einer mit Teflon beschichteten Oberfläche so aufgetragen, daß nach dem Trocknen eine Schichtdicke von 0,3 bis 0,4 mm erhalten wurde. Nach 4 h Trocknen an der Luft wurde eine weitere Schicht in gleicher Stärke aufgebracht. Nach 1 bis 2 Tagen entfernte man den Film sorgfältig von der Teflonoberfläche und beließ ihn senkrecht hängend 14 Tage bei 23°C und 50% Luftfeuchtigkeit.

Die Bestimmung von Reißkraft und Reißdehnung erfolgte mit einem Instron-Tensile Tester in Anlehnung an die DIN 53 455 und die DIN 53 504. Die angegebenen Meßwerte sind jeweils Mittelwerte aus 5 Messungen an 5 Prüfkörpern. Diese wurden aus den Filmen herausgestanzt. Als Probenkörperformat wurde das in DIN 53 504 als Normstab S2 beschriebene Hantelformat angewendet. Die Dicke der Proben wurde mit einem Dickemeßgeräte nach DIN 53 370 mit kreisförmiger Tastenform von 10 mm Durchmesser überprüft. Die Probenkörper wurden in die Klammern einer Zugprüfmaschine eingespannt und mit einer Zuggeschwindigkeit von 5 mm/Minute gerissen. Die Reißdehnung ist die Dehnung im Augenblick des Reißens. Sie bezieht sich auf 23°C und 1 atm. Ihre Angabe erfolgt als $[(l-l_0)/l_0] \times 100$

(%). Dabei bedeuten: $l_0$ = ursprüngliche Meßlänge, 1 = Meßlänge beim Reißen. Entsprechend ist die Reißkraft die im Augenblick des Reißens anzuwendende Kraft. Sie wird üblicherweise auf den Querschnitt bezogen angegeben. Die Ergebnisse sind in Tabelle 1 zusammengefaßt.

5. Bestimmung der Wasserfestigkeit

Die nach 4. hergestellten Filme wurden gewogen, in Wasser gelegt, nach 96 h abgetrocknet und erneut gewogen. Die prozentuale Gewichtszunahme ist ein Maß für die Wasseraufnahme (Tabelle 1).

6. Bestimmung der Oberflächen-Klebrigkeit

Die Bestimmung der Oberflächenklebrigkeit von Beschichtungen, die analog den Beschichtungen für den Haftfestigkeits-Test (siehe 3.) hergestellt wurden, erfolgte nach der "Finger-Test"-Methode. Die Ergebnisse sind in Tabelle 1 zusammengestellt.

Tabelle 1

| Beispiele | DAAM/ADDH[1] (pphm/pphm) | Haftung auf PU-Schaum[2] | | Reißkraft (N/mm$^2$) | Reißdehnung (%) | Wasseraufnahme (%) | Oberflächenklebrigkeit |
|---|---|---|---|---|---|---|---|
| | | trocken | naß | | | | |
| VB 1 | 0/0 | 0 | 0 | 0,60 | 650 | 12,4 | klebrig |
| VB 2 | 0/0,45 | 0 | 0 | 0,60 | 600 | 11,9 | klebrig |
| B 1 | 3,0/0 | 0 | 0 | 0,46 | 500 | 9,8 | klebrig |
| B 2 | 3,0/0,225 | 3 | 2 | 0,90 | 350 | 6,4 | wenig |
| B 3 | 3,0/0,45 | 3 | 3 | 1,20 | 130 | 6,1 | nicht |

1 DAAM = Diacetonacrylamid; ADDH = Adipinsäuredihydrazid; pphm = parts per hundred monomer
2 (PLI = pounds per linear inch)
0: 0-0,5 PLI (0-0,09 kg/cm) adhäsiver Bruch
1: 0,6-2,0 PLI (0,10-0.36 kg/cm) adhäsiver Bruch
2: 2,1-4,0 PLI (0,37-0,71 kg/cm) kohäsiver Bruch, Reißen des Glasfasergewebes
3: 4,1-8,0 PLI (0,72-1,43 kg/cm) kohäsiver Bruch, Reißen des Glasfasergewebes

## Patentansprüche

1. Verwendung von Zubereitungen, bestehend aus wenigstens einer wäßrigen Polymerisatdispersion als Komponente a), deren Polymerisat eine Glasübergangstemperatur unterhalb 10 und oberhalb -60 °C aufweist und funktionelle Gruppen $-X-Y-R^1$ aufweist, worin

   $R^1$ für Alkyl, Aryl oder Aralkyl steht,
   Y für C=O steht,
   -X- ausgewählt ist unter einer Einfachbindung, Alkylen, Arylen, $-R^2-O-R^3-$, $-R^2-Z-O-R^3-$, $-R^2-Z-CH_2-R^3-$, $-R^2-Z-N(R^4)-R^3-$, $-R^2-O-Z-O-R^3-$, $-R^2-O-Z-CH_2-R^3-$, $-R^2-O-Z-N(R^4)-R^3-$, $-R^2-N(R^5)-Z-O-R^3-$, $-R^2-N(R^5)-Z-CH_2-R^3-$, $-R^2-N(R^5)-Z-N(R^4)-R^3-$,
   worin
   $-R^2-$für eine Einfachbindung, Alkylen, Oxyalkylen, Polyoxyalkylen, Arylen steht und an das Polymer gebunden ist,
   $-R^3-$für Alkylen oder Arylen steht und an Y gebunden ist,
   Z für $SO_2$ oder C=O steht,
   $R^4$ und $R^5$ unabhängig voneinander für Wasserstoff, Alkyl, Aryl, Aralkyl oder eine Gruppe $-R^3-Y-R^1$ stehen, worin Y, $R^1$ und $R^3$ die zuvor genannten Bedeutungen besitzen,

   und wenigstens einer Verbindung mit mindestens zwei $NH_2$-Gruppen pro Molekül als Komponente b), als Bindemittel in Dichtungs oder Beschichtungsmassen für Polyurethanschäume.

2. Verwendung nach Anspruch 1, wobei das Polymerisat a) funktionelle Gruppen $-X-Y-R^1$ aufweist, worin R1 und Y die in Anspruch 1 angegebene Bedeutung besitzen und
   -X- für $R^2-Z-O-R^3-$ oder $-R^2-Z-N(R^4)-R^3-$ steht.

3. Verwendung nach Anspruch 1 oder 2, wobei $R^2$ für eine Einfachbindung oder $C_1-C_4$-Alkylen steht.

4. Verwendung nach einem der Ansprüche 1 bis 3, wobei das Polymerisat in Komponente a) durch radikalische Copolymerisation wenigstens eines ethylenisch ungesättigten Monomer A mit wenigstens einem ethylenisch ungesättigten Monomer B der allgemeinen Formel I,

   $$R^7-CH=C(R^6)-X-Y-R^1 \qquad (I)$$

   worin
   $R^6$ für Wasserstoff oder Methyl steht,
   $R^7$ für Wasserstoff, Alkyl, Aryl, Aralkyl oder $-X-Y-R^1$ steht und
   X, Y und $R^1$ die in Anspruch 1 angegebenen Bedeutungen besitzen,
   erhältlich ist.

5. Verwendung nach Anspruch 4, wobei die Monomere B ausgewählt sind unter Bisacetonylacrylamid oder Bisacetonylmethacrylamid.

6. Verwendung nach einem der Ansprüche 4 oder 5, wobei die Monomere B 0,1 bis 10 Gew.-% der Gesamtmonomermenge ausmachen.

7. Verwendung nach einem der Ansprüche 4 bis 6, wobei die Monomere A
   80 bis 99,9 Gew.-% vinylaromatische Monomere, $C_1-C_{12}$-Alkylvinylether, Vinyl- oder Allylester von $C_1-C_{18}$-Monocarbonsäuren, Ester $\alpha,\beta$-ungesättigter $C_3-C_8$-Mono- oder Dicarbonsäuren oder deren Nitrile und/oder $C_4-C_8$-konjugierte Diene,
   0,1 bis 20 Gew.-% modifizierende Monomere und
   0 bis 5 Gew.-% vernetzende Monomere
   umfassen.

8. Verwendung nach einem der vorhergehenden Ansprüche, wobei die Komponente b) ein Di- oder Polyhydrazid einer Di- oder Polycarbonsäure ist.

9. Verwendung nach Anspruch 8, wobei die Komponente b) ausgewählt ist unter den Dihydraziden aliphatischer $C_2-C_{14}$-Dicarbonsäuren und den Dihydraziden aromatischer $C_8-C_{22}$-Dicarbonsäuren.

**10.** Verwendung nach Anspruch 9, wobei als Komponente b) das Dihydrazid der Adipinsäure verwendet wird.

**11.** Verwendung nach einem der vorhergehenden Ansprüche, wobei die Komponente b) 0,01 bis 5 Gew.-%, bezogen auf den Polymeranteil der Komponente a) ausmacht.

**Claims**

**1.** The use of formulations composed of at least one aqueous dispersion of a polymer as component a), having a glass transition temperature of below 10°C and above -60°C and functional groups -X-Y-$R^1$, where

$R^1$ is alkyl, aryl or aralkyl,
Y is C=O,
-X- is a single bond, alkylene, arylene, -$R^2$-O-$R^3$, -$R^2$-Z-O-$R^3$-, -$R^2$-Z-$CH_2$-$R^3$-, -$R^2$-Z-N($R^4$)-$R^3$-, -$R^2$-O-Z-O-$R^3$-, -$R^2$-O-Z-$CH_2$-$R^3$-, -$R^2$-O-Z-N($R^4$)-$R^3$-, -$R^2$N-($R^5$)-Z-O-$R^3$-, -$R^2$-N($R^5$)-Z-$CH_2$-$R^3$-, -$R^2$-N($R^5$)-Z-N($R^4$)-$R^3$-, where
-$R^2$- is a single bond, alkylene, oxyalkylene, polyoxyalkylene or arylene and is attached to the polymer,
-$R^3$- is alkylene or arylene and is attached to Y,
Z is $SO_2$ or C=O, and
$R^4$ and $R^5$ independently are hydrogen, alkyl, aryl, aralkyl or a group -$R^3$-Y-$R^1$, where Y, $R^1$ and $R^3$ are as defined above,

and at least one compound having at least two $NH_2$ groups per molecule as component b),
as binders in sealing or coating compositions for polyurethane foams.

**2.** The use according to claim 1, wherein the polymer a) has functional groups -X-Y-$R^1$ in which $R^1$ and Y are as defined in claim 1 and -X- is $R^2$-Z-O-$R^3$- or -$R^2$-Z-N($R^4$)-$R^3$-.

**3.** The use according to claim 1 or 2, wherein $R^2$ is a single bond or $C_1$-$C_4$-alkylene.

**4.** The use according to any of claims 1 to 3, in which the polymer in component a) is obtainable by free-radical copolymerization of at least one ethylenically unsaturated monomer A with at least one ethylenically unsaturated monomer B of the formula I

$$R^7\text{-CH=C}(R^6)\text{-X-Y-}R^1 \qquad (I)$$

where
$R^6$ is hydrogen or methyl,
$R^7$ is hydrogen, alkyl, aryl, aralkyl or -X-Y-$R^1$ and X, Y and $R^1$ are as defined in claim 1.

**5.** The use according to claim 4, wherein the monomers B are selected from bisacetonylacrylamide or bisacetonylmethacrylamide.

**6.** The use according to either of claims 4 and 5, wherein the monomers B make up from 0.1 to 10% by weight of the overall quantity of monomers.

**7.** The use according to any of claims 4 to 6, wherein the monomers A comprise from 80 to 99.9% by weight of vinyl aromatic monomers, $C_1$-$C_{12}$-alkyl vinyl ethers, vinyl or allyl esters of $C_1$-$C_{18}$ monocarboxylic acids, esters of $\alpha,\beta$-unsaturated $C_3$-$C_8$ mono- or dicarboxylic acids or nitriles thereof and/or $C_4$-$C_8$ conjugated dienes, from 0.1 to 20% by weight of modifying monomers and from 0 to 5% by weight of crosslinking monomers.

**8.** The use according to any of the preceding claims, wherein component b) is a di- or polyhydrazide of a di- or polycarboxylic acid.

**9.** The use according to claim 8, wherein component b) is selected from the dihydrazides of aliphatic $C_2$-$C_{14}$ dicarboxylic acids and the dihydrazides of aromatic $C_8$-$C_{22}$ dicarboxylic acids.

**10.** The use according to claim 9, wherein component b) used is the dihydrazide of adipic acid.

11. The use according to any of the preceding claims, wherein component b) makes up from 0.01 to 5% by weight, based on the polymer content of component a).

## Revendications

1. Utilisation, en tant que liant dans des masses d'étanchéité et de revêtement pour mousses de polyuréthanne, de préparations qui se composent d'au moins une dispersion aqueuse de polymères en tant que composant a), dont le polymère présente une température de transition vitreuse inférieure à 10°C et supérieure à -60°C et contient des groupes fonctionnels $-X-Y-R^1$, où

   $R^1$ est un groupe alkyle, aryle ou aralkyle,
   Y est C=O,
   -X- est choisi parmi une liaison simple, un groupe alkylène, un groupe arylène, $-R^2-O-R^3-$, $-R^2-Z-O-R^3-$, $-R^2-Z-CH_2-R^3-$, $-R^2-Z-N(R^4)-R^3-$, $-R^2-O-Z-O-R^3-$, $-R^2-O-Z-CH_2-R^3-$, $-R^2-O-Z-N(R^4)-R^3-$, $-R^2-N(R^5)-Z-O-R^3-$, $-R^2-N(R^5)-Z-CH_2-R^3-$, $-R^2-N(R^5)-Z-N(R^4)-R^3-$,
   où
   $-R^2-$ est une liaison simple ou un groupe alkylène, oxyalkylène, polyoxyalkylène, arylène, et est lié au polymère,
   $-R^3-$ est un groupe alkylène ou arylène et est lié à Y,
   Z est $SO_2$ ou C=O,
   $R^4$ et $R^5$ représentent chacun indépendamment de l'autre un atome d'hydrogène ou un groupe alkyle, aryle, aralkyle ou $-R^3-Y-R^1$ où Y, $R^1$ et $R^3$ ont les significations données ci-dessus,

   et au moins un composé ayant au moins deux groupes $NH_2$ par molécule en tant que composant b).

2. Utilisation selon la revendication 1, pour laquelle le polymère a) contient des groupes fonctionnels $-X-Y-R^1$ où $R^1$ et Y ont les significations données dans la revendication 1, et -X- est $R^2-Z-O-R^3-$ ou $-R^2-Z-N(R^4)-R^3-$.

3. Utilisation selon la revendication 1 ou 2, pour laquelle $R^2$ est une liaison simple ou un groupe alkylène en $C_1$-$C_4$.

4. Utilisation selon l'une des revendications 1 à 3, pour laquelle le polymère du composant a) peut être obtenu par copolymérisation radicalaire d'au moins un monomère A à insaturation éthylénique et d'au moins un monomère B à insaturation éthylénique de formule générale I

   $$R^7 - CH = C(R^6) - X - Y - R^1 \qquad (I)$$

   dans laquelle
   $R^6$ est un atome d'hydrogène ou le groupe mèthyle,
   $R^7$ est un atome d'hydrogène ou un groupe alkyle, aryle, aralkyle ou $-X-Y-R^1$, et
   X, Y et $R^1$ ont les significations données dans la revendication 1.

5. Utilisation selon la revendication 4, pour laquelle les monomères B sont choisis parmi le bisacétonylacrylamide et le bisacétonylméthacrylamide.

6. Utilisation selon l'une des revendications 4 ou 5, pour laquelle les monomères B représentent de 0,1 à 10 % en poids de la quantité totale des monomères.

7. Utilisation selon l'une des revendications 4 à 6, pour laquelle les monomères A comprennent de 80 à 99,9 % en poids de monomères vinylaromatiques, d'éther vinylique d'alkyle en $C_1$-$C_{12}$, d'esters vinyliques ou allyliques d'acides monocarboxyliques en $C_1$-$C_{18}$, d'esters d'acides mono- ou dicarboxyliques en $C_3$-$C_8$ $\alpha,\beta$-insaturés ou de leurs nitriles et/ou de diènes conjugués en $C_4$-$C_8$; de 0,1 à 20 % en poids de monomères modifiants; et de 0 à 5 % en poids de monomères réticulables.

8. Utilisation selon l'une des revendications précédentes, pour laquelle le composant b) est un di- ou un polyhydrazide d'un acide di- ou polycarboxylique.

9. Utilisation selon la revendication 8, pour laquelle le composant b) est choisi parmi les dihydrazides d'acides dicarboxyliques aliphatiques en $C_2$-$C_{14}$ et les dihydrazides d'acides dicarboxyliques aromatiques en $C_8$-$C_{22}$.

10. Utilisation selon la revendication 9, pour laquelle on utilise en tant que composant b) le dihydrazide de l'acide adipique.

11. Utilisation selon l'une des revendications précédentes, pour laquelle le composant b) représente de 0,01 à 5 % en poids par rapport à la partie polymère du composant a).

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 187505 A
- US 3345336 A
- EP 258988 B
- US 4269749 A
- EP 40419 B
- DE 4435423 A
- DE 4419518 A
- DE 4435422 A
- EP 010000 A
- DE 4318083 A
- EP 624610 A
- US 3429852 A
- US 3574617 A
- US 4148987 A


### In der Beschreibung aufgeführte Nicht-Patentliteratur


- **T.G. FOX.** Bull. Am. Phys. Soc. (Ser. II. 1956, vol. 1, 123
- Ullmanns Encyklopädie der technischen Chemie. 1980, 17, 18
- Ullmann's Encyclopedia of Industrial Chemistry. VCH, 1992, vol. A 21, 169
- **J. BRANDRUP ; E.H. IMMERGUT.** Polymer Handbook. J. Wiley, 1989
- Methoden der organischen Chemie. **HOUBEN-WEYL.** Makromolekulare Stoffe. Georg-Thieme-Verlag, 1961, vol. XIV/1, 411-420
- Methoden der organischen Chemie. **HOUBEN-WEYL.** Makromolekulare Stoffe. Georg-Thieme-Verlag, 1961, vol. XIV/1, 192-208
- Encyclopedia of Polymer Science and Technology. John Wiley & Sons Inc, 1966, vol. 5, 847